# EUROPEAN PATENT APPLICATION

(11) **EP 2 101 091 A1**
(43) Date of publication of application: **16.09.2009**
(21) Application number: 08167690.0
(22) Date of filing: 28.10.2008
(51) Int. Cl.: F16J 15/10, F16L 23/18

(54) **Spiral wound gasket**

(30) Priority: 11.03.2008 IT BS20080049
(71) Applicant: Carrara S.p.A., 25030 Adro BS (IT)
(72) Inventor: Carrara, Sergio, I-24067, Sarnico, BERGAMO (IT)
(74) Representative: Pulieri, Gianluca Antonio

(57) **Abstract**

A spiral wound gasket (1) comprises an internal ring (2), an intermediate ring (14), made by the coiling (16) of a continuous non-metallic tape. The internal ring (2) is made of a non-metallic material, for example PTFE.

## Description

The present invention relates to a gasket with radially concentric rings, including an intermediate ring and an inner ring, usually intended to be fitted on a mechanical organ, such as a shaft or a pipe.

These seals are known in the field as "spiral wound gaskets"; an example of the embodiment is described in document NL 9,301,692.

Generally, the intermediate ring is made from a tape in a non-metal material wrapped on itself, and the inner ring is made of steel.

As is known, gaskets of this type are widely used for static gaskets, especially pipelines that carry technical fluids, often highly aggressive, as for the oil refining industry, the chemical industry in general, nuclear power stations, aerospace, medical applications and more.

Therefore these gaskets often need to be suitable to withstand a hostile environment, while preserving the reliability qualities required for different applications.

Under this point of view, the materials that make up the rings of such gaskets often originate compatibility issues.

The purpose of the present invention is to make a spiral wound gasket that meets these needs and exceeds both the drawbacks mentioned with reference to the prior art.

This objective is achieved by a gasket made in accordance with the following claim 1; the claims from this the describe variants of embodiment.

The characteristics and advantages of the gasket in accordance with the present invention will be apparent from the description below, given by way of example and not limited to, in accordance with the following figures, in which:

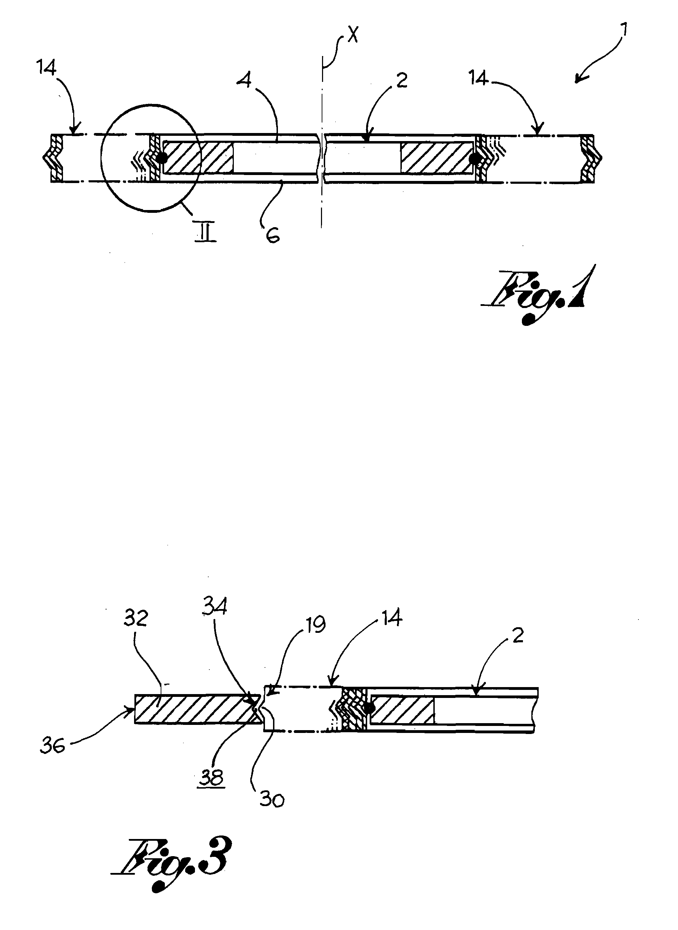

- Figure 1 represents a section of a gasket in accordance with the present invention, according to an embodiment;

- Figure 2 illustrates the magnification of part II of Figure 1;

- Figure 3 shows a section of a gasket in accordance with the present invention, according to a further embodiment, and

- Figure 4 represents a portion of a gasket section in accordance with the present invention, according to a still further embodiment.

With reference to attached figures, 1 illustrates in its entirety a gasket with radially concentric rings, of the type known as "spiral wound gasket."

The gasket 1 includes an inner ring 2 with a gasket axis X, intended to be fitted on a body to perform a seal.

Preferably, perpendicular to the gasket axis X, the inner ring 2 has faces 4, 6 flat and parallel.

Along the thickness, ring 2 presents a lateral annular surface 8, in other words, the said lateral surface 8 is an annular portion of a cylindrical surface, coaxial to the axis of gasket X.

The lateral surface 8 shows an annular seat 10, usually at half the thickness and symmetrical compared to a surface perpendicular to the axis of the gasket X.

The inner ring 2 is made of one piece, in a non-metallic material; preferably, the inner ring is made of PTFE.

The gasket 1 also includes a connection ring 12, coaxially positioned to the internal ring 2, inside the annular seat 10.

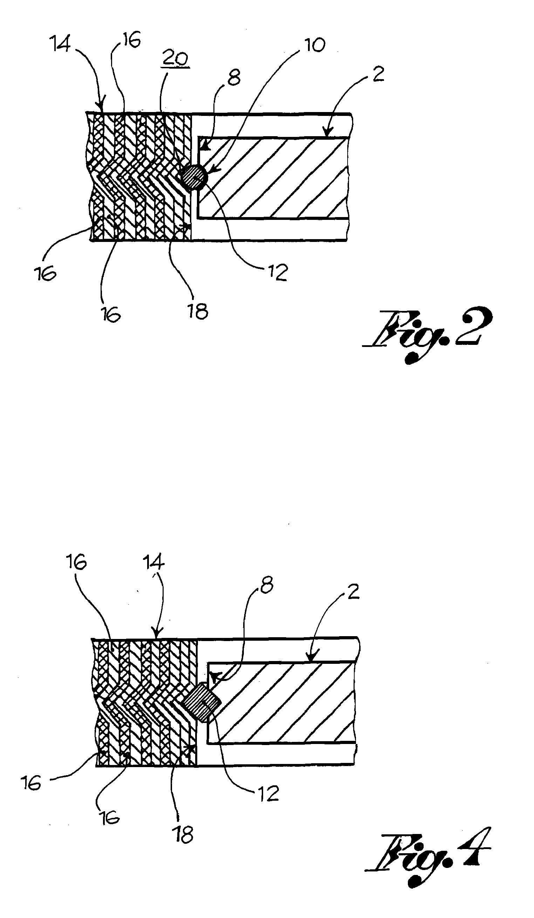

According to an embodiment, the connection ring 12 has a circular cross section (Figure 2); according to a further embodiment, the connection ring 12 has a rhomboidal section (Figure 4).

The connection ring 12 has such dimensions to protrude from its annular seat section 10, which is projecting radially from the lateral surface 8 of the said ring.

Preferably, the connection ring is made from a single piece of steel.

The gasket 1 also includes a intermediate ring 14, concentric to the internal ring 2; the intermediate ring 14 is made from a tape wrapped so as to achieve a succession of radial coils 16. The tape is, in other words, a spiral wrapped around the axis of gasket X.

The tape, which comprises the intermediate ring, is made of non-metallic materials such as asbestos, graphite, PTFE or muscovite.

The intermediate ring 14 presents an internal interface 18, facing the lateral surface 8 of the internal ring 2; the intermediate ring 14 also has an external interface 19, which externally demarcates the ring, along its thickness.

The internal interface 18 presents an annular groove 20, for example V shaped, with vertex pointing radially.

The connection ring 12 sits with its protruding part of the annular seat 10 of the internal ring 2, in the internal annular groove 20 of the intermediate ring 14, ensuring the connection between them.

Preferably, the tape which comprises the intermediate ring 14 has a groove on one side along its entire length, and its thickness of the material in correspondence with it remains constant, therefore a ridge corresponds to the said grove on the other side, which takes the form of the corresponding groove.

In other words, the radial thickness of the coiling 16 is constant along the axial direction highlighted by the axis of gasket X.

For the first winding, namely the winding in contact with the inner ring, the groove of the tape that makes the said annular groove 20, while the coupling between the windings which constitute the intermediate ring are made under the ridge of a previous coiling that is wedged into the groove of the later coil. The coiling windings are therefore radially packed.

Preferably, in addition, the intermediate ring has an annular ridge 30 on the external interface 19.

For the last coiling, namely the coiling farthest from the internal ring 2, the outer surface of which is the external interface 19, the ridge of the tape creates the said annular ridge 30.

According to a preferred embodiment, the gasket 1 includes an outer ring 32, concentric to the intermediate ring, positioned on its outside.

The outer ring 32 features an internal interface 34, in contact with the external interface 19 of the intermediate ring 14, and a limited lateral surface 36, which defines the thickness of the outer ring 32.

Preferably, the internal interface 34 of the outer ring 32 has an annular indentation 38 with a form corresponding to that of the annular ridge 30 intermediate 14; the annular ridge 30 is housed in the annular indentation 38 to connect the external ring 32 to the intermediate ring 14.

Preferably, the outer ring is made of one piece, in a metallic material, such as steel.

Innovatively, the gasket according to the present invention has considerable resistance to environmental aggression and considerable resistance to Electro-corrosion that are present in certain environments on contact between the inner ring and the body to which it is fitted.

Advantageously, moreover, the gasket is manufactured economically.

According to another advantageous aspect, the gasket provides an excellent ability to be fitted on bodies provided by the relative deformability of the internal ring.

It is clear that a technical expert, in order to meet specific and incidental needs, could make changes to the gasket described above. These changes falling within the scope of protection defined in the following claims

## Claims

1. Spiral wound gasket (1) comprising:
- an inner ring (2) having an axis of gasket (X), with an annular lateral surface (8) which has an annual seat (10);
- the intermediate ring (14), concentric to the internal ring (2) and coupled to it, with an internal interface (18) in contact with the laterals surface (8) of the internal ring (2) and an external interface (19) that externally delimits the said ring, the said intermediate ring being comprised of coiling (16) of a continuous tape wrapped around the axis of the gasket (X), the said tape being made of a non-metallic material;
where the inner ring (2) is made of materials other than steel.

2. Gasket according to claim 1, in which the inner ring is made of PTFE.

3. Gasket according to claim 1 or 2, where the ring is made of asbestos fibre or graphite or muscovite.

4. Gasket according to any of the previous claims, including a connection ring (12) coaxial to the internal ring (2), in which:
- the lateral surface (8) of the internal ring (2) has an annular seat (10);
- the internal interface (18) of the intermediate ring (14) has an annular groove (20);
- the connection ring (12) is inserted into the annular seat (10), protruding from the lateral surface (8), located in the annular groove (20) of the intermediate ring (14).

5. Gasket according to claim 4, in which the connection ring (12) is made of a metallic material, for example steel.

6. Gasket according to any of the previous claims, in which the tape which creates the intermediate ring (14) presents a groove on one side along the entire length and a corresponding ridge on the other face, said housing (16) of the intermediate ring being radially packed in as much that the ridge of the previous coiling is wedged in the groove of the subsequent coiling.

7. Gasket according to claim 6, in which the radial thickness of the coiling (16) is constant in the axial direction.

8. Gasket according to any of the previous claims, comprising an external ring (32), concentric to the intermediate ring (14), having an internal interface (34) in contact with the external interface (19) of the intermediate ring (14), and a lateral surface (36) that externally delimits it.

9. Gasket according to claim 8, in which the external ring (32) is made of a metallic material, for example steel.

10. Gasket according to claim 8 or 9, in which
- the internal interface (34) of the external ring (32) presents an annular indentation (38),
- the external interface (19) of the intermediate ring (14) presents an annular ridge (30)
- the annular ridge (30) is inserted into the annular indentation (38) to connect the external ring (32) to the intermediate ring (14).
